# EUROPEAN PATENT APPLICATION

(11) **EP 4 730 083 A1**
(43) Date of publication of application: **22.04.2026**
(21) Application number: 24206585.2
(22) Date of filing: 15.10.2024
(51) Int. Cl.: G06F 3/01

(54) **COMPUTER TERMINAL AND METHOD FOR INTERACTION**

(71) Applicant: Mehdi Moniri, Mohammad, 40474 Düsseldorf (DE)
(72) Inventor: Mehdi Moniri, Mohammad, 40474 Düsseldorf (DE)
(74) Representative: Gille Hrabal Partnerschaftsgesellschaft mbB Patentanwälte

(57) **Abstract**

The invention relates to a computer terminal for interaction with at least one person, a computer-implemented method for interaction with at least one person using a computer terminal and a computer program product. A computer terminal (1) for interaction with at least one person comprises at least one input device (2, 3, 4, 5, 6) for receiving interaction information, a data processing means (10) for generating output information (12) based on the received interaction information, said data processing means (10) having access to topic-related information (15), and a visual output device (7) for visually outputting said output information (12). The data processing means (10) comprises a virtual-reality module (20) which is configured to generate virtual-reality information based on the topic-related information (15). The virtual-reality information includes an animated character. Said output information (12) includes said virtual-reality information.

## Description

The invention relates to a computer terminal for interaction with at least one person, in particular an interactive computer terminal for topic-based interaction, a computer-implemented method for interaction with at least one person using a computer terminal and a computer program product.

Computer terminals are known which provide information on specific topics. For example, ticket vending machines give information responsive to a user input such as a request for a departure time of a train or bus. However, the interaction with the machine is usually very limited, for example due to the fact that both the cognitive cont such that the user's attention is easily distracted.

Therefore, the task of the invention is to provide a computer terminal with improved human-machine interaction.

The task of the invention is solved by the computer terminal according to claim 1 and by the computer-implemented method and the computer program product according to the additional claims. Preferable embodiments are defined in the dependent claims.

A computer terminal for interaction with at least one person serves to solve the task. The computer terminal comprises at least one input device for receiving interaction information, a data processing means for generating output information based on the received interaction information, said data processing means in particular having access to topic-related information, and, in particular, a visual output device for visually outputting said output information. In particular, the data processing means comprises a virtual-reality module which may be configured to generate virtual-reality information based on the topic-related information. In particular, said virtual-reality information includes an animated character. In particular, said output information includes said virtual-reality information.

It has been shown that an animated character is particularly suitable for human-machine interaction, as it can be related to the information to be provided, and as it is suitable for constantly interacting with the user. Thus, the user's attention is significantly enhanced. The animated character does not only relate to the visualization of information but allows to provide information in a more targeted and effective way. A continued human-machine interaction is facilitated.

A character is a visual representation of a figure such as a person or an animal. The character may for example be inspired by one of the main characters of a book. The animated character is a virtual character which can be designed according to the respective requirements. For example, a design of the character may be sketchy or realistic. The animated character may be in 2D or 3D. The virtual-reality module is configured to generate the animated character so that the animated character can be output using the visual output device. In particular, the virtual-reality module comprises an Al and/or deep-learning algorithm to animate the character. In particular, the virtual-reality module comprises a generative Al for generating the animated character.

A virtual-reality module is a module which provides virtual-reality information, such as the animated character. In a simple embodiment, the virtual-reality module provides a graphical user interface (GUI).

Preferably, the virtual-reality module is configured as a mixed-reality module for providing mixed-reality information. Mixed reality is a mix of reality, for example actual scenery, person (s) and/or item(s), and virtuality, for example the animated character and/or virtual objects. Mixed-reality information may comprise augmented-reality information. Augmented reality is reality enriched by virtual information. One or more elements of a virtual world are brought into a real-world scene. For example, the virtual character and/or virtual object(s) may be shown together with or interact with a visual representation of the physical environment. Mixed-reality information may comprise augmented-virtuality information. Augmented virtuality is virtuality enriched by reality information. One or more elements of the real world are brought into a virtual scene, such as an animated world based on a product or book. For example, a virtual world shown on the visual output device can be shown together or interact with reality information, for example a person and/or item of the physical environment captured by a scene camera.

A computer terminal is an electronic or electromechanical hardware device that can be used by a person for entering data into, and retrieving data from, a computer. The computer of the computer terminal according to the invention is in particular the data processing means.

Interaction information is information from the user during interaction with the computer terminal. Interaction information may include, for example hand, face, and/or body gestures, movement, language such as spoken words and/or information inputted via an input device such as a touch screen.

The data processing means preferably comprises a processor and a memory. Said memory may comprise a stored computer program code, i.e. instructions that can be stored in the memory. The processor, the memory and the computer program code may be configured such that the interaction with the user can be performed. The data processing means may comprise one or more Al algorithms. For example, different Al algorithms may be used for different tasks.

In particular, the data processing means has access to topic-related information. "Having access" includes "being configured to establish access" (such as, e.g., via a data network as the internet and/or to a data storage means). In particular, an Al and/or deep-learning algorithm has access to and/or has been trained using said topic-related information.

In particular, there is a data connection, or a data connection can be established between the data processing means and the at least one input device and/or to the visual output device. The data processing means may comprise different modules which may be physically separated and/or arranged in one or more physical units. In particular, modules of the data processing means are or can be 6in data connection with one another and/or with a main module of the data processing means.

Topic-related information, also referred to as topic-related data, is information related to a specific topic, in particular related to a specific physical item. Topic-related information may be, for example, related to a particular book, a particular product or to train services. Topic-related information may include a content of a book or of a part of a book, a user manual and/or installation instructions for a product offered, a departure schedule of a specific train station. In general, information can also be referred to as data.

Generating information based on specific input information means that the information generated depends on the specific input information. The input information is taken into account during generation of said information. The information generated would be different if the specific input information were not present. Said information can be generated based on different input information. Thus, a plurality of different pieces and/or types of information (e.g. from different sources) can be taken into account when generating said information.

The computer terminal comprises a visual output device, i.e., a device for visually outputting information. For example, a display such as a touch screen is used. However, different output devices are possible, such as, for example, holographic 3D output devices. In case of a touch screen, this also serves as an input device, for example as the input device of the computer terminal.

Output information is generated based on the received interaction information. Thus, at least one aspect of the output information is dependent on the received interaction information. For example, at least a topic of the output information, a type of the output information (for example voice or display) and/or a content of the output information is based on the received information. Preferably, the computer terminal is configured to perform a continued interaction with the user. Thus, the computer terminal answers the user's questions, may ask a counter-question, may give additional information and/or may perform movements related to the topic and/or the physical item. The output information may be or comprise said virtual-reality information.

In particular, said output information is based both on said interaction information and said topic-related information. For example, the data processing means may answer to the user's questions asked during the interaction based on said topic-related information.

In particular, the computer terminal is configured to perform a continued interaction with the user. The user can ask questions and/or give key points, and the computer terminal can react, for example answering the questions and/or providing information based on the key points. For example, the computer terminal can be configured to greet a user, for example after having identified an addressable user. Thus, a dialogue can be started.

The computer terminal may be designed in multiple parts. For example, there may be a main terminal station having a screen and/or a data processing means. There may be one or more additional sensors such as a camera or a microphone. The sensors are in data connection with the data processing means. However, there does not have to be a physical connection.

In one embodiment, the data processing means is configured to generate, set, adapt and/or select an appearance and/or behaviour of the animated character based on said topic-related information.

Thus, the animated character can convey information relating to the relevant topic, which may be a specific book, through its appearance and/or behaviour. More information and a different kind of information can thus be conveyed which can be received by the user and anchored with increased intensity. It is known that multimodal learning increases the ability to remember and anchor information. Thus, the appearance or behaviour solves the technical problem of effectively providing a high amount of information in a limited time.

For example, the animated character can resemble a main character of a book and/or can behave like a main character of a book. In another example, the animated character can be a character of a specific company such as a company mascot.

The virtual-reality module may provide one or more objects, for example in addition to the animated character. The objects may be connected to the topic of the physical item identified. For example, in case of a book about a magician, a wand may be provided. One or more objects may be selected dependent on the topic. In case of a product offered, the object may be a virtual duplicate of said product. For example, an intended use of said object can be visualized in this way. The animated character may be configured to interact with the one or more objects, for example to include them into his or her movement. In particular, the data processing means is configured to determine where to place the object or objects and how to use them. Objects may for example include parts of a scenery, such as trees, a sun or moon, parts of a building, a vehicle, etc.

In one configuration, two or more animated characters are used.

In one embodiment, the virtual-reality module is configured as a mixed-reality module which combines the animated character with a visual representation of a physical environment. In particular, the virtual-reality module is configured to generate interaction between the animated character and a visual representation of a physical environment.

A physical environment is an actual scenery and/or item. The visual representation of the physical environment may comprise an image or video, for example recorded in the surroundings of the computer terminal. Alternatively or additionally, the visual representation of the physical environment may comprise an image or video of a physical item such as a specific book, a train station, or a product offered. In this case, the visual representation can be based on the topic-related information.

Interaction between the animated character and the visual representation may include the animated character using or making reference to parts of the visual representation. In particular, the animated character interacts with virtual objects and/or the visual representation of the physical environment. For example, the animated character can sit on a product which is depicted on the screen, e.g., a book. For example, the animated character can move relative to the product, for example, walk or ride a bike on the book, e.g. on the contour of the book. This kind of interaction enhances information transfer to the user and thus helps to establish the continuing human-machine interaction. In particular, the output information includes said animated character interacting with said physical environment.

Alternatively or additionally, the animated character can be visually output or shown in addition to the physical environment. The animated character is then only shown together with the physical environment, without interaction.

In one embodiment, said virtual-reality module is configured to receive the visual representation of the physical environment from a camera of the computer terminal and/or from said topic-related information. The camera may be the input device or a camera which is different from the input device. In this embodiment, the animated character may be shown together with the persons present and/or interact with these persons, for example in a video stream showing the persons interacting with the computer terminal. In another option, a virtual scenery is generated and shown together or in interaction with the animated character based on the topic-related information. For example, a building or landscape described in a book can be visualized.

In one embodiment, the at least one input device comprises a scene camera for capturing image or video information, in particular including one or more users. In one embodiment, the data processing means is configured such that said image or video information captured by said scene camera is used as a basis for the visual representation of the physical environment. In one embodiment, the visual representation including the animated character are displayed on the visual output device. The scene camera may be such that a scene including the one or more users and/or at least parts of the surroundings of the computer terminal can be captured. A product camera for capturing the product is not a scene camera according to the invention.

The image or video information is used as a basis for the visual representation. In one example, said image or video information is taken as the visual representation. In this example, the animated character is added to the scenery as captured. In another example, the image or video information is modified. Thus, the captured scenery can be modified in different ways, including adding the animated character.

This allows to mirror the captured image or video information by the visual output device and to place the animated character in the captured image or video information. In other words, the animated character can be blended into the real scene or modified real scene.

In one embodiment, the data processing means is connected to a text-to-speech module for converting provided text information into speech information. In one embodiment, the computer terminal comprises a speaker for outputting speech information, in particular acoustically. In one embodiment, said output information includes speech information spoken by the animated character. Thus, the computer terminal is configured for multimodal interaction in which image or video information can be output at the same time as acoustic language.

Thus, the output information may comprise both visual information and acoustic speech information. The computer terminal is therefore configured for multimodal interaction in which images or videos can be output at the same time as acoustic language. The multimodal nature of the animated character facilitates the continued human-machine interaction. As information can be provided at the same time both visually and via language, more information, for example more detailed information, can be provided, and in a more effective way. Providing the same information only visually could overwhelm the user, as there are physiological limitations regarding the amount of information that can be consumed using only the visual mode.

"Is connected" includes "is configured to establish a connection". No permanent connection is required. The text-to-speech module may be inside the computer terminal or outside the computer terminal. The text-to-speech module may be connected to the data processing means via the internet, for example. In particular, the text-to-speech module comprises a deep-learning speech-synthesis module, in particular applying a deep neural network.

The text information may be provided by the data processing means. In particular, the text information is based on the output information. It has been shown that a speaking animated character is particularly suitable to transfer information to the user. In particular, the text-to-speech module comprises a deep-learning speech-synthesis module, in particular applying a deep neural network.

For example, the data processing means can be configured such that speech is produced in a language recognized by a language-recognition module. If a person is addressed whose language has not been recognized or analysed, the output speech language can be determined differently. For example, a default language can be used depending on the location of the computer terminal, or English can be used. After language recognition, the language can be switched.

The animated character may perform gestures during the interaction. This may be in addition or alternatively to speech. When in combination with speech, a multimodal interaction is enabled. Spoken contents may be underlined by gestures to promote communication.

In one embodiment, the input device comprises a product camera for capturing image or video data of a physical item presented by a user. In one embodiment, the data processing means comprises a vision-analysis module for generating identification information about the physical item based on said image or video data. In one embodiment, the data processing means is configured to generate said output information based on the identification information.

The physical item is typically a physical item which the user can hold and present to the product camera. The user can, for example, present a book, a product offered or a ticket to the product camera. The physical item may be visually represented on a handheld device, for example in the form of a visual representation or a digital code on a smartphone. A product camera is configured to capture a product, a physical item or a code, for example. An item may be placed on a placement area during capturing. A product camera is in particular not configured to capture a scene. A scene camera for capturing the product is not a product camera according to the invention. Instead of or in addition to a product camera, the computer terminal may also comprise a scene camera which may also be configured to capture image or video data of a physical item presented by a user.

In particular, the vision-analysis module is configured to detect visual features of the image or video data which allow for identifying the physical item. The vision-analysis module may comprise an Al and/or deep-learning algorithm for detecting said features and/or for identifying the physical item. Identification features may comprise a title or product name, a manufacturer or author, a size or issue, etc.

Generating identification information or the search may be performed directly based on image or video data or based on information extracted from said image or video data, such as text. For example, an author and/or a title of a book may be extracted and used for generating identification information of the object or for searching further information. The virtual character may then start or continue an interactive dialogue with the user. Generating identification information may comprise identifying the product., e.g., generating a clear assignment to a product of a list.

In one embodiment, said topic-related information includes information related to a number of specific physical items. In one embodiment, the data processing means comprises a decision module for deciding whether the physical item is part of said number of specific physical items. In one embodiment, if yes, the data processing means is configured to generate said output information based on the topic-related information related to the physical item. In one embodiment, if no, the data processing means is configured to retrieve information, for example to perform an offline and/or online search, based on image or video data of the physical item captured by the product camera and to generate said output information based on obtained information, e.g., search results. The search can be performed for example in one or more data carriers which are in data connection with the data processing means. In particular, the computer terminal has an interface for establishing a connection to the internet, such as a Wi-Fi interface, for example.

In other words, there is a list of specific physical items, for example books or products offered, which are known to the computer terminal. Known means that the data processing means has access to topic-related information regarding the items from the list. The computer terminal can decide whether or not it has information on the item presented. If yes, said information is used to generate the output information. In other words, details of the specific physical item can be presented to the user. For example, in case of an available full text of the book, the computer terminal can use this knowledge to summarize at least a part of the book, preferably without revealing too much information. In particular, the information related to the number of specific physical items has been provided to the data processing means as available data and/or training data for an Al algorithm which the output information is based on.

In particular, the data processing means is connected to a look-up table comprising physical items of which topic-related information is available. The data processing means may comprise said look-up table. Thus, the comparison of the physical item with the list can be performed quickly and easily.

For example, several topics of a book can be identified or predetermined. Topic-related information is available to the computer terminal for each of these topics. For example, the animated character used can be selected dependent on the specific topic. There may be more animated characters and the one which fits best can be selected, for example as a reaction to a specific question.

The data processing means may be configured to generate particularly detailed output information based on topic-related information related to a known physical item. The data processing means establishes or uses a connection to the topic-related information related to the physical item.

If the physical item is not known, information can be searched. The search may be performed using one or more search engines. In particular, the data processing means comprises an unknown-item communication module for performing interactive communication about a physical item which is not on the list of specific physical items. Said interactive communication may comprise presenting information found during a search. In particular, a live search is meant which is performed during interaction with the user. A search can be performed using a deep-learning and/or Al algorithm. A first computer method, for example using a deep-learning and/or AI algorithm, can be used to extract information about the product or item, as described below. A second computer method, for example using another deep-learning and/or AI algorithm, can be used to search information about the product or item, for example using one or more search engines. A third computer method, for example using yet another deep-learning and/or Al algorithm, can be used to generate the output information in order to perform the interactive conversation with the user.

In one configuration, the computer terminal is configured to interact with the user, also relating to questions which are not relevant to the physical item. This helps enhance interaction. In one configuration, the computer terminal is configured to search information in response to a user input. The computer terminal can then include searched information when answering the user, for example in said output information. The search may be an online search.

In one embodiment, the at least one input device comprises a scene camera for capturing image or video information, in particular including a plurality of persons. In one embodiment, the data processing means comprises a person-detection module to detect one or more persons, for example in the captured image or video information. In one embodiment, the data processing means is configured such that one or more persons of the detected one or more persons are addressed, in particular using speech information outputted by a speaker of the computer terminal.

Thus, a potential user can be actively addressed. Detecting one or more persons may include detecting that zero, one or more persons are present. Detecting one or more persons may include detecting the specific number of persons, e.g. that seven persons are present.

A scene camera may be configured to capture the surroundings of the computer terminal, in particular the region in which a user is expected to be positioned when interacting with the computer terminal.

In one configuration, the data processing means comprises a target-person identification module to identify one or more target persons suitable for addressing out of the detected one or more persons. The target-person identification module may be configured to take into account different kinds of information such as movement, direction, posture, gesture, and the like, to identify a suitable target person. Thus, one or more persons which are likely to be receptive to addressing can be addressed in a targeted manner. For example, a person who faces the computer terminal is more likely to be receptive to addressing than a person who faces away from the computer terminal. A person who approaches the computer terminal is more likely to be receptive to addressing than a person who walks away from the computer terminal. A target-person identification module may be configured to determine the focus of attention of a person to decide whether or not to address this person. Thus, likelihood of successful addressing can be increased. The target-person identification module may be part of a rapid-reaction module.

In one configuration, the data processing means is configured to extract a person and/or an object of the real world captured by the scene camera. Said person and/or object extracted can be included in a visual representation using the virtual-reality module, for example in a mixed-reality representation.

In one configuration, the person-detection module is configured to detect or estimate one or more properties of the person. A property can be a personal characteristic. For example, an age or gender of the person can be estimated based on visual inspection of the captured image or video information, for example based on image data and/or movement data. The person can be assigned to different age groups. The person-detection module may be part of a rapid-reaction module.

In one configuration, the data processing means is configured such that the output information, for example the way of addressing the person, and/or a module of the data processing means used to generate said output information, is based on the property of the person. For example, a younger person can be addressed using different language than an older person. In another example, a younger person can be addressed with a different speech rate than an older person. A female person can be addressed using a different animated character than a male person. A person speaking a certain language can be addressed using this language.

The property can be related to clothing or other outer characteristics. For example, a person wearing a red scarf, a yellow skirt or a specific accessory can be addressed referring to this particular piece of clothing or accessory in order to address them directly or personally.

In one configuration, the data processing means is configured to determine and/or use a property of a person and/or an object captured. A property can be, for example, a colour, a distance for example between objects and/or people and/or between an object or human and the camera. In one configuration, the data processing means is configured to use a property as a basis for generating said output information. The data processing means can enrich the interaction by a property. For example, in order to relate to the red colour of something (for example a colour in a book or regarding a product) and there is a red apple behind the user (which can be seen by the system), the output information may comprise information that the colour is deep red, a deeper red that the apple behind you. For example regarding a distance, the output information may comprise that the distance was/is (regarding the story for the product or the book) two meters, a bit more than the distance between the table and the chair behind you. The output information can also relate to people in the scene, for example something is taller than the man behind you (when describing a height). The data processing means may comprise an estimation module for estimating people and/or object information from detected input such as from the scene camera. The estimation module may comprise a deep-learning and/or Al algorithm. The computer terminal may comprise one or more additional sensors for detecting such input. The computer terminal thus connects or binds the reality in the scene that can be seen by the user to information regarding the product (or book) that is being described. This may happen on the fly and/or change when the scene is changing. This leads to an enhanced information transfer.

In one embodiment, the at least one input device comprises a scene camera for capturing image or video information including a plurality of persons. In one embodiment, the data processing means comprises a gesture-detection module to detect one or more gestures performed by a person. In particular, the gesture is performed by a person captured by the scene camera. In particular, the data processing means is configured such that said output information is based on a detected gesture. In other words, a gesture is used as interaction information. For example, a user's nod may be interpreted in approval or interest. Recognizable gestures may include a number of body gestures (such as approaching or moving away), hand gestures (such as thumbs up or down, a stop gesture involving a stretched hand, etc.), head gestures (such as nodding or shaking of the head) and/or face gestures (such as a smile or a critical look). Only examples are given. A great variety of gestures is possible.

In one embodiment, the computer terminal comprises an acoustic input device for receiving voice information. In one embodiment, the data processing means comprises a speech-recognition module for recognizing text out of the recieved voice information. In one embodiment, the data processing means is configured to generate said output information based on the recognized text.

The acoustic input device is in particular a microphone. The speech-recognition module is in particular an automated speech-recognition module and/or based on a deep-learning or Al algorithm. In one configuration, the speech-recognition module comprises a language-recognition module. For example, when speech is detected, the language-recognition module recognizes the language and then the speech-recognition module recognizes the content of the speech in the language recognized. In particular, the language-recognition module is configured to recognize a plurality of different languages. In particular, the speech-module is configured to recognize text in a plurality of different languages. The text is for example a question of the user. The question is used by the data processing means, for example, to generate an answer for the user.

In one embodiment, the computer terminal comprises a user-detection sensor to detect a presence of a user, wherein the data processing means is configured to start a dialogue with a user when a user has been detected.

The user-detection sensor is in data connection with the data processing means. Thus, the data processing means is notified that a user is present. The data processing means can then directly address the user. It may be detected if an addressable user is present. "User" includes "potential user". Thus, any person in the surrounding of the computer terminal may be referred to as user.

The user-detection sensor is a sensor for sensing the presence of a user. The sensor may be or comprise a camera. Thus, a user can be detected visually. The camera may be a scene camera of the computer terminal. A user can be detected by their appearance. The camera may be a product camera of the computer terminal. A user can be detected by their action, such as positioning a product in front of the product camera.

Alternatively or in addition to detecting a person based on image or video information, a person can be detected by a different sensor such as an ultra-sound sensor, infra-red sensor or a microphone to detect a user due to their sound.

In one embodiment, the data processing means is configured to apply a deep-learning algorithm to generate the output information, in particular based on topic-related information related to a physical item identified.

This allows the computer terminal to provide information relevant to the user in a particularly quick and efficient manner. No cumbersome information search is required. Human-machine interaction is used to make information transfer more efficient and more effective. Particularly relevant information and specifically asked information is filtered and provided.

Training data of the deep-learning algorithm include, in particular, the topic-related information related to a number of physical items such as books, products and the like. Training data may include, for example, human dialogue data, i.e. written notes of dialogues between persons.

Another aspect of the invention is a computer-implemented method for interaction with at least one person using a computer terminal. The method may comprise receiving, in particular by an input device of the computer terminal, interaction information. The method may comprise generating, in particular by a data processing means of the computer terminal, output information based on the received interaction information. In particular, said data processing means has access to topic-related information. The method may comprise visually outputting said output information, in particular by a visual output device of the computer terminal. In particular, the data processing means comprises a virtual-reality module which is configured to generate virtual-reality information based on the topic-related information. In particular, said virtual-reality information including an animated character, wherein said output information may include said virtual-reality information. In particular, the computer terminal is according to the invention. All features, embodiments and advantages of the computer terminal described at the outset also apply to the method and vice versa.

The method may comprise capturing image or video information using a scene camera and, in particular, using captured image or video information as a basis for the visual representation. The method may comprise converting provided text to speech information and, in particular, outputting speech information. The method may comprise identifying a physical item and, in particular, outputting output information based on said identified physical item. The method may comprise deciding whether a physical item identified is part of a number of specific physical items. The method may comprise detecting a one or more persons in captured image or video information and, in particular, addressing one or more of the detected one or more persons. The method may comprise receiving acoustic voice information, recognizing text out of voice information and/or generating output information based on recognized text.

Another aspect of the invention is a computer program product comprising instructions which, when the program is executed by a computer terminal, cause the computer terminal, in particular the data processing means, to carry out the steps of the computer-implemented method according to the invention. In particular, the computer terminal is according to the invention. All features, embodiments and advantages of the computer terminal and the method described above also apply to the computer program product and vice versa. In particular, said instructions are stored in a non-transitory way.

In the following, exemplary implementations of the invention are explained in more detail using figures. Features of the exemplary implementations can be combined individually or in a plurality with the claimed objects, unless otherwise indicated. The claimed scopes of protection are not limited to the exemplary implementation.

The figures show:
- Figure 1:: an interaction graph of a computer terminal;
- Figure 2:: a schematic representation of a computer terminal;
- Figures 3 to 6:: architectures of different computer terminals;
- Figures 7 to 10:: different computer terminals; and
- Figure 11:: the computer terminal of Figure 10 in side view.

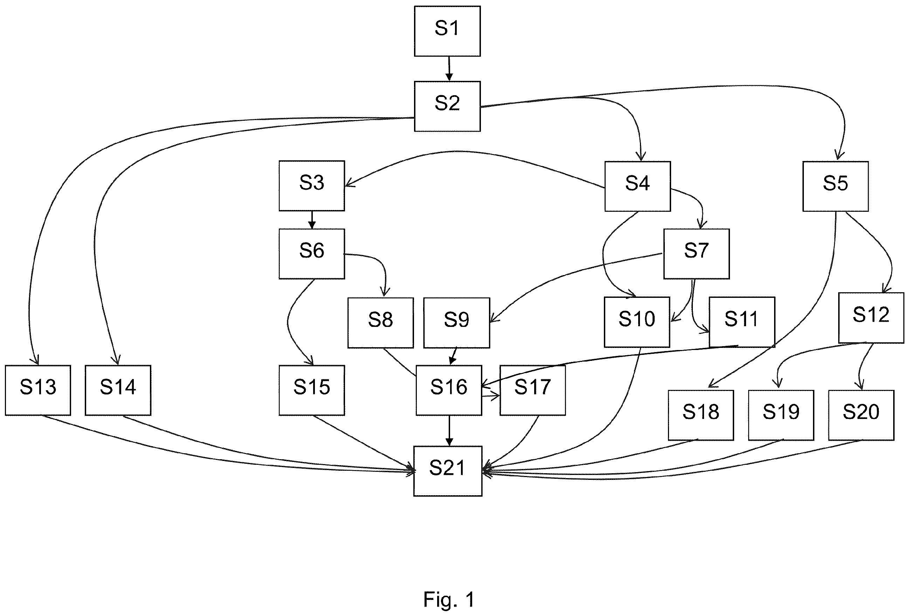

Figure 1 shows an interaction graph of a computer terminal according to the invention. The different tiles represent interaction phases which, typically, start at start S1 and result in an action S21, for example an output information in the form of a statement of the animated character. Once an action S21 has been performed, typically, the interaction graph is run through again. The computer terminal shown and described here is used for performing interaction related to books. The computer terminal determines whether or not it has access to information related to a specific book and, depending on the outcome, interacts with the user to give information. However, alternatively, the very same computer terminal could be used for any product offered in a construction market or grocery store, for example. In this case, for example properties, contents or installation instructions could be among the information provided. In particular, each tile comprises an Al and/or deep-learning algorithm.

S2 represents start router. A router may be configured to route the dialogue or interaction. This may be performed by setting a topic for the next interaction step. S13 represents an initial greeting. S14 represents a book not detected interaction. S4 represents start unknown book router. However, independently of books, this can be generally referred to as an unknown product router. The dialogue is thus first related to an unknown book. S3 represents send image to AI. An image of the physical item, such as a book, is sent to a vision-analysis module. A send image to Al router S6 can be started. If the item can be identified, for example a book summary S8 can be started. If not, a book not found S15 dialogue can be started.

Starting from the unknown book router S7, questions can be answered (answer question S9), questions can be suggested (question suggestion S16) and categories or topics can be generated (generate category S17) for example, an appearance or behaviour of the animated character can be chosen, set or adapted according to a topic. Alternatively or additionally, an unknown book goodbye S10 or an unknown book pre-goodbye S11 can be started. In case of a pre-goodbye, a question can be suggested (S16).

Starting from start router S2, an animated character router can be started (start animated character router S5). An animated character greet S18 can be started and/or an an animated character router S12 can be started. Different animated character interactions S19, S20 can be performed.

Figure 1 depicts an example algorithm which may be used to route the user's query for a book. Depending on the input information, the data processing means, in particular comprising AI, may greet the user in the first stage and/or recognize if the book presented by the user is a known or unknown book. Depending on this information, the algorithm may take different paths. If the book is known, the animated character may guide the user through one or several topics of the book, for example a summary of the book or a figure or a plot of the book. These topics may have been fed to the data processing means before. The virtual-reality module may comprise characters and environment, in particular for each of these topics. The data processing means, e.g. the virtual-reality module and/or an AI, defines which character to bring along, which objects to show and where to show them and/or what to say. The data processing means may listen to the user and look at the user and act depending on the user's input. If the user asks question which is not relevant to the product or the current topic, the animated character may also answer these questions.

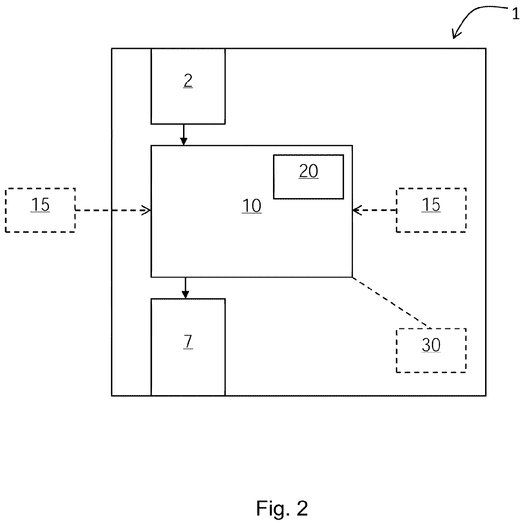

Figure 2 schematically shows a computer terminal 1 according to the invention. The computer terminal 1 comprises an input device 2, a data processing means 10 and a visual output device 7. The data processing means 10 comprises a virtual-reality module 20 for generating virtual-reality information including an animated character. The data processing means 10 may have access to topic-related information which may be stored outside the computer terminal 1 or from inside the computer terminal 1. In particular, the computer terminal 1 further comprises an interface 10 for data connection with the outside, for example with a network such as the internet. Thus, the computer terminal 1 and in particular the data processing means 10 can access external data. A control device 21 controls what is shown on the visual output device 7 and, in particular, what is outputted using the speaker 11. Data is processed in different modules which together form the data processing means 10.

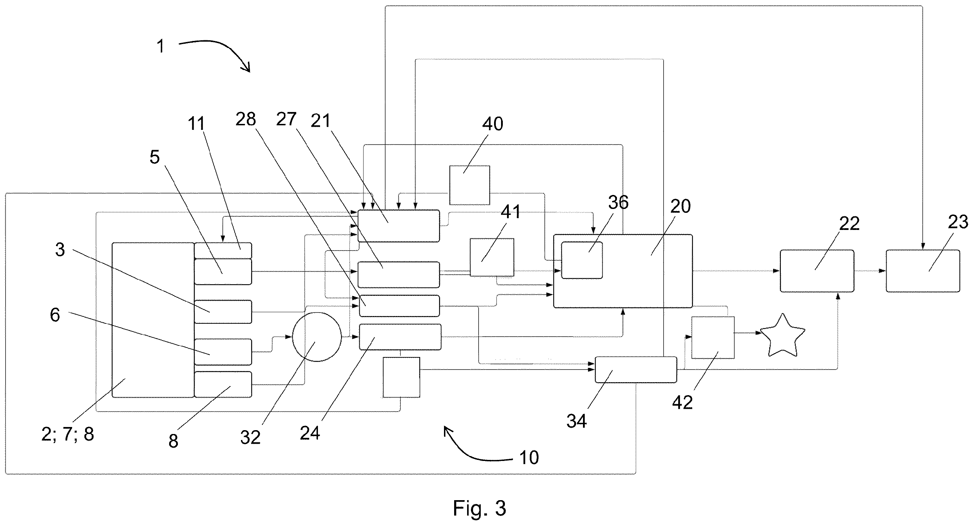

Figures 3 to 6 show architectures of different computer terminals 1 according to the invention in detail. These computer terminals 1 have different functionalities and are designed according to specific requirements. However, arbitrary combinations of the details of the computer terminals of Figures 3 to 6 are possible.

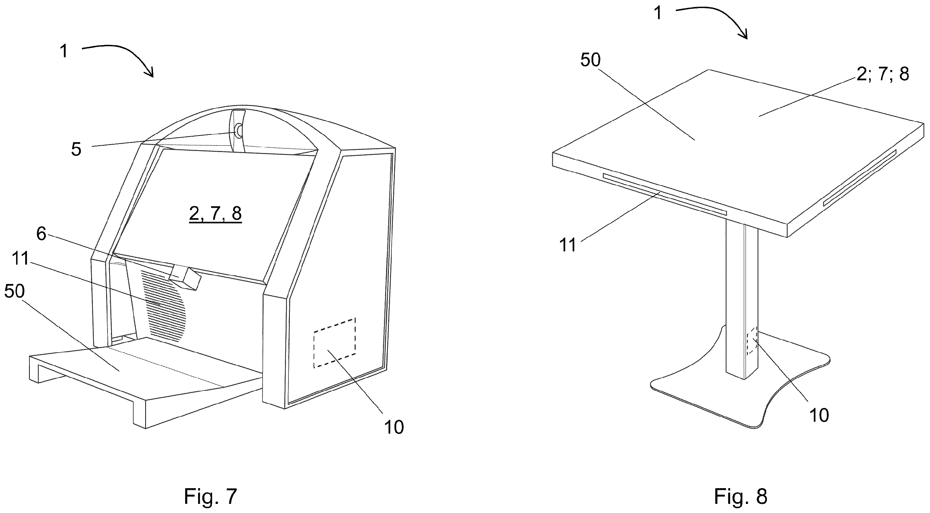

Figure 3 shows an architecture of a computer terminal which may be similar to the one shown in Figure 7. On the left, the input and output devices are shown. A touch screen 8 serves both as an input device 2 and as a visual output device 7. As input devices 2, the computer terminal 1 further comprises an acoustic input device 3 such as a microphone, a user and/or scene camera 5 and a product camera 6. Besides the touch screen 8, a speaker 11 is present as an output device and connected to the control device 21.

The image or video data captured by product camera 6 is duplicated, e.g. using a virtual camera 32. One version is sent to a vision-analysis module 24 for identifying the product which is a physical item such as a book. The result is sent to the virtual-reality module 20. The other version is sent to the control device 21. In this way, the product can be shown on the visual output device 7. The control device 21 may communicate with the virtual-reality module 20. The vision-analysis module 24 may comprise a decision module for deciding whether the physical item identified is part of a number of specific physical items.

The image or video captured by the scene camera 5 is sent to a person-detection module 27 to detect one or more persons in the scene. The results, which can be referred to as scene information 41, are sent to the virtual-reality module 20. The acoustic information captured by the acoustic input device 3 is sent to a speech-recognition module 28 to recognize spoken words and, in particular, generate text. Results are sent to the virtual-reality module 20. A connection may be present from the control device 21 to the speech-recognition module 28, for example to provide keywords or one or more topics of the text to be recognized. This helps improve text recognition.

The virtual-reality module 20 is connected with a text-to-speech module 22, which may be connected to a file server. Thus, speech can be generated and sent to the speaker 11. Data from the virtual-reality module 20 which may be referred to as animation 40 are sent to the control device 21.

The virtual-reality module 20 generates virtual-reality information, in particular including the animated character, based on topic-related information for example relating to a product identified in the vision-analysis module 24. The virtual-reality module 20 may use all provided input, as described, to generate interaction with the user. For example, the animated character can be adapted or selected according to the topic-related information, the behaviour, the appearance and/or objects of the animated character can be selected or adapted accordingly, a combination or interaction with a physical environment may be generated, the animated character can move and speak.

In some embodiments, the data processing means 10, in particular the virtual-reality module 20, may further comprise a rapid-reaction module 36. A rapid-reaction module 36 is configured for particularly rapid interaction. Thus, waiting times for a reaction of the computer terminal 1 are minimized and a human-machine interaction similar to a natural conversation between humans can be achieved. The rapid-reaction module 36 may comprise a data storage for storing data. The rapid-reaction module typically uses Al or deep-learning algorithms to generate output using the data stored in the data storage and/or being trained with data stored in the data storage. In particular, the rapid-reaction module does not search for information externally, such as online. In one configuration, the rapid-reaction module is not connected to an external network such as the internet and/or does not comprise means for connection to an external network.

A rapid-reaction module 36 may receive scene information 41, for example from a scene camera 6, as input information. A rapid-reaction module may comprise a person-detection module to detect one or more persons in the captured image or video information in order to address the persons, for example by voice and/or at least one gesture. For example, the animated character may perform a hand gesture "please come closer". A rapid-reaction module may be configured to detect a person walking by or passing by and to address this person in order to start interaction. A rapid-reaction module may comprise a target-person identification module as described above. The rapid-reaction module may use one or more of the following: age or age group of one or more users, gender of one or more users, number of users, visual attention of one or more users, distance of one or more users, for example to the camera and/or computer terminal. A rapid-reaction module may use offline Al to generate or influence the behaviour (e.g. mood), reaction (e.g. visual reaction such as body language) and/or response (for example using words) of the virtual character. In one configuration, the rapid-reaction module has access to a data storage comprising predetermined behaviour, reaction and/or response information. This information can be accessed and used very quickly without further input or connection in order to rapidly react to a specific scene, for example to address a user. Usual issues regarding the long response time of conventional Al systems are eliminated and the ongoing interaction is enhanced.

A rapid-reaction module, a person-detection module or a target-person identification module may be configured to go through a decision tree. For example, a first check could be if a person looks at the computer terminal and is located within a predetermined maximum distance. If yes, the person shall be addressed. In particular, a deep-learning or Al algorithm may be used to go through the decision tree. This can be performed offline and/or without further input and, thus, very quickly. Although the generated output information is generated using a deep-learning algorithm and/or Al, and can thus be very specific for the concrete interaction, it is generated very quickly which allows for a fluent interaction.

In case a physical item cannot be identified using the vision-analysis module 24, or is identified as being not among the number of specific physical items or known items, an unknown-item communication module 34 may become active, which may be connected to an external network and/or data storage, for example to retrieve information related to the item. Such input may then be sent to the virtual-reality module 20. A state "waiting for input" 42 may be active, for example during information retrieval. Interaction can continue also during this state.

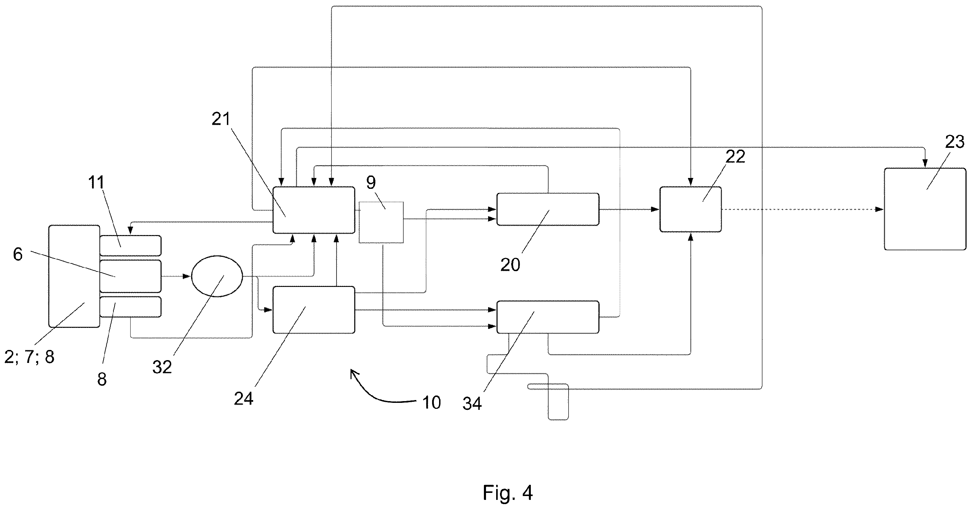

Figure 4 shows an architecture of a similar computer terminal 1 with reduced functionality. The computer terminal may be similar to the one shown in Figure 8. To largely avoid repetitions, reference is made to the description of Figure 3 above and in particular differences are described here. The shown computer terminal 1 does not comprise a scene camera or an acoustic input device. Also, the respective modules are not provided here. Touch information 9 are sent from the touch screen 8 to the virtual-reality module 20 and to the unknown-item communication module 34. Also here, the image or video data of the product camera 6 is duplicated in a virtual camera 32 to be sent to the control device 21 and to the vision-analysis module.

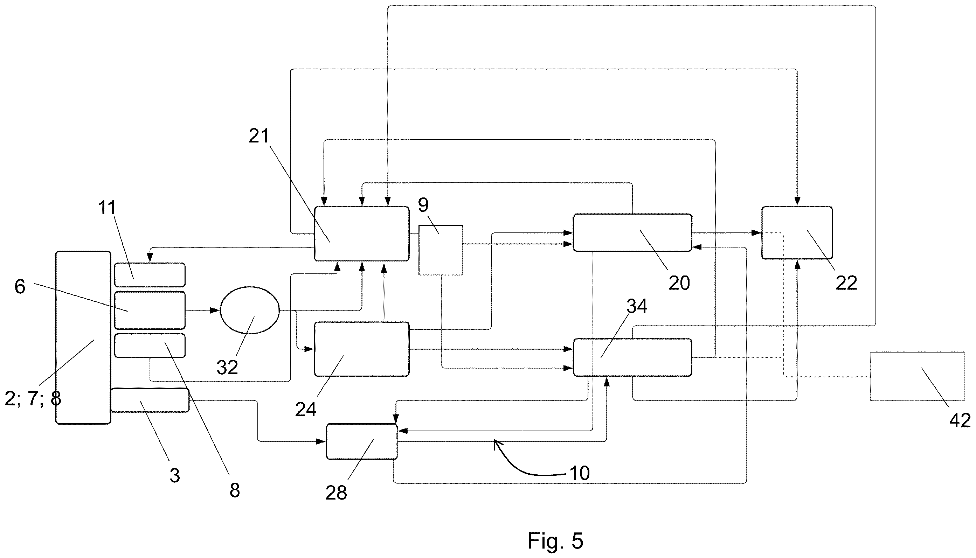

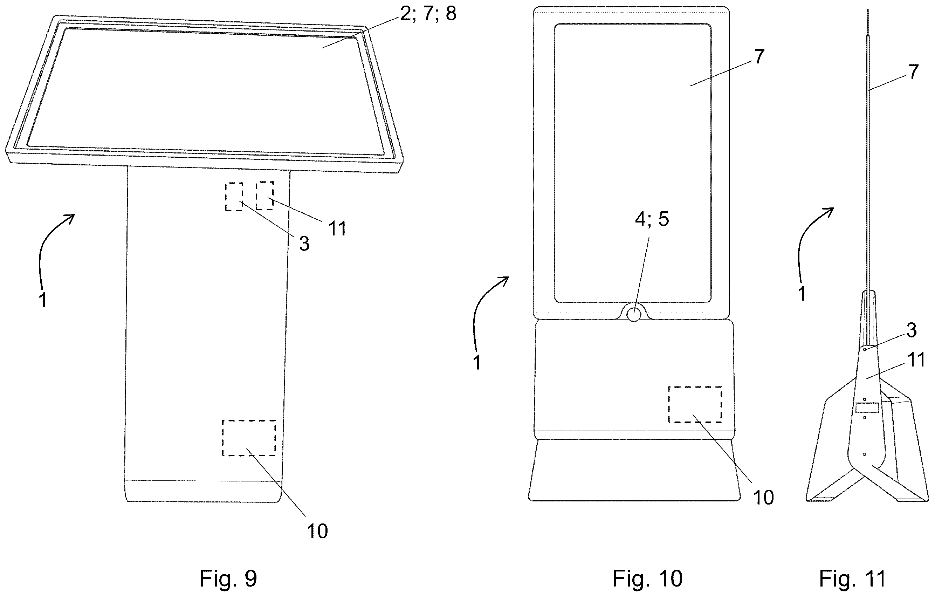

Figure 5 shows another architecture which has a reduced functionality when compared to Figure 3, but an increased functionality when compared to Figure 4. The computer terminal may be similar to the one shown in Figure 9. In addition to the architecture shown in Figure 4, the one shown here also has an acoustic input device 3 and, therefore, also a speech-recognition module 28.

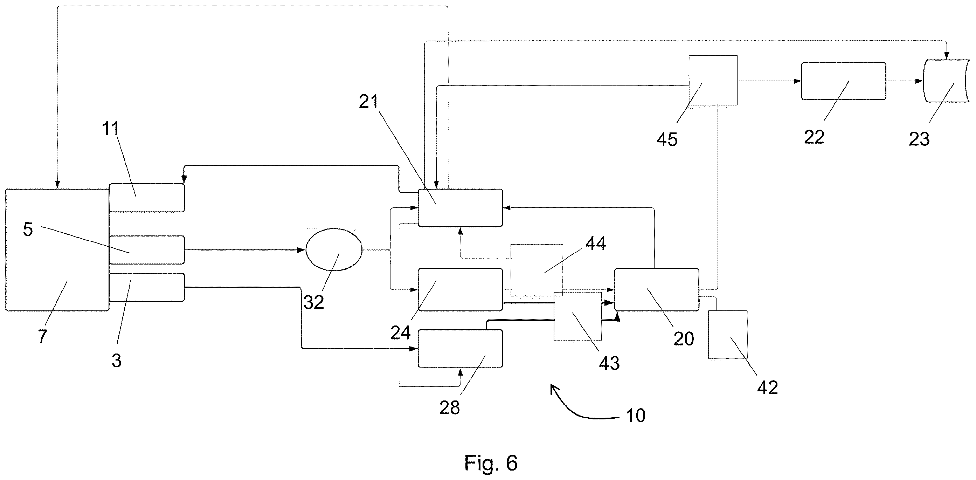

Figure 6 shows another architecture which is configured to perform interaction related to a specific product such as a specific book. There is no product camera in this device and no identification is performed. Interaction is in particular restricted to the one product. The data processing means has access to information regarding the specific product, which is in particular internally-stored information. The computer terminal may be similar to the one shown in Figures 9 and 10. The visual output device 7 may be a conventional screen without touch functionality. Text information which may be referred to as TTS (text-to-speech) message 45 is sent to the text-to-speech module 22.

In this embodiment, the image or video data from the scene camera 5 is duplicated using a virtual camera 32. One version is sent to the control device 21 and one version is sent to the vision-analysis module 24. The latter may comprise a person-detection module to detect one or more persons in the captured image or video information. The latter may comprise a gesture-detection module to detect one or more gestures performed by a person. Thus, output information such as the animated character may be based on one or more detected gestures. ASR (automatic speech recognition) and/or gestures 43 are sent from the vision-analysis module 24 to the virtual-reality module 20. This is, however, also possible in any other embodiment.

In this and/or other embodiments, the data processing means 10 may be configured to duplicate the image or video information from the scene camera 5 on the screen. For example, the information may be mirrored. The animated character may interact with the real scene in front of the computer terminal, which may comprise one or more persons and/or users. Mirror information 44 is sent to the control device 21.

Figure 7 shows a computer terminal 1 in the form of a kiosk. The computer terminal has a placement area 50 where the user can place a product. The product camera 6 can then capture image or video data of the product. There is also a speaker 11 and a scene camera 5 which may be configured to capture image or video data of the user or users. There is a visual output device 7 which is designed as a touch screen 8 and, therefore, also serves as input device 2. The data processing means 10 is typically installed inside a housing of the computer terminal 1. However, it can also be placed outside the computer terminal. Thus, the computer terminal can be designed as a system with multiple, physically separated parts which may be in data connection with each other, for example. The product camera is in particular provided separately.

Figure 8 shows a different design of a computer terminal 1 in the form of a coffee table. The table surface carries a placement area 50 for placing the product and/or a visual output device 7 which may also serve as an input device 2. Also here, a data processing means 10 may be installed inside a housing. Figure 9 shows another design with a central stand on which a visual output device 7 is in particular centrally installed. The output device 7 may be designed as a touch screen 8 and, therefore, also serve as input device 2. The central stand and/or other parts of the housing may comprise an acoustic input device 3, a speaker 11 and/or the data processing means 10.

Figures 10 and 11 show another design of a computer terminal in the shape of a poster display. In particular, the visual output device 7 is a screen without touch functionality. A front camera 4 can serve as scene camera 5. The data processing means 10 is typically installed inside a housing of the computer terminal 1.

**List of Reference Signs**

| | |
|---|---|
| Computer terminal | 1 |
| Input device | 2 |
| Acoustic input device | 3 |
| Camera | 4 |
| Scene camera | 5 |
| Product camera | 6 |
| Visual output device | 7 |
| Touch ccreen | 8 |
| Touch information | 9 |
| Data processing means | 10 |
| Speaker | 11 |
| Output information | 12 |
| Topic-related information | 15 |
| Virtual-reality module | 20 |
| Control device | 21 |
| Text-to-speech module | 22 |
| File server | 23 |
| Vision-analysis module | 24 |
| Person-detection module | 27 |
| Speech-recognition module | 28 |
| Deep-learning algorithm | 29 |
| Interface | 30 |
| Virtual camera | 32 |
| Unknown-item communication module | 34 |
| Rapid-reaction module | 36 |
| Animation | 40 |
| Scene information | 41 |
| Waiting for input | 42 |
| ASR text and/or gesture | 43 |
| Mirror information | 44 |
| TTS message | 45 |
| Placement area | 50 |
| Start | S1 |
| Start router | S2 |
| Send image to AI | S3 |
| Start unknown book router | S4 |
| Start animated character router | S5 |
| Send image to AI router | S6 |
| Unknown book router | S7 |
| Book summary | S8 |
| Answer question | S9 |
| Unknown book goodbye | S10 |
| Unknown book pre-goodbye | S11 |
| Animated character router | S12 |
| Initial greeting | S13 |
| Book not detected | S14 |
| Book not found | S15 |
| Question suggestion | S16 |
| Generate category | S17 |
| Animated character greet | S18 |
| Animated character interaction 1 | S19 |
| Animated character interaction 2 | S20 |
| Action | S21 |

## Claims

1. A computer terminal (1) for interaction with at least one person, comprising
- at least one input device (2, 3, 4, 5, 6) for receiving interaction information,
- a data processing means (10) for generating output information (12) based on the received interaction information, said data processing means (10) having access to topic-related information (15), and
- a visual output device (7) for visually outputting said output information (12),
wherein the data processing means (10) comprises a virtual-reality module (20) which is configured to generate virtual-reality information based on the topic-related information (15), said virtual-reality information including an animated character, wherein said output information (12) includes said virtual-reality information.

2. The computer terminal (1) of the preceding claim, wherein the data processing means (10) is configured to generate or select an appearance and/or behaviour of the animated character based on said topic-related information (15).

3. The computer terminal (1) of one of the preceding claims, wherein the virtual-reality module (20) is configured as a mixed-reality module which combines the animated character with a visual representation of a physical environment, in particular to generate interaction between the animated character and the visual representation of the physical environment.

4. The computer terminal (1) of the preceding claim, wherein said virtual-reality module (20) is configured to receive the visual representation of the physical environment from a camera (4, 5, 6) of the computer terminal (1) and/or from the topic-related information (15).

5. The computer terminal (1) of the preceding claim, wherein the at least one input device (2, 3, 4, 5, 6) comprises a scene camera (5) for capturing image or video information including one or more persons, wherein the data processing means (10) is configured such that said image or video information is used as a basis for the visual representation of the physical environment, wherein both the visual representation and the animated character are displayed on the visual output device (7).

6. The computer terminal (1) of one of the preceding claims, wherein:
- the data processing means (10) is connected to a text-to-speech module (22) for converting provided text information into speech information,
- the computer terminal (1) comprises a speaker (11) for outputting said speech information, and,
- in particular, said output information (12) includes speech information spoken by the animated character.

7. The computer terminal (1) of one of the preceding claims, wherein
- the input device (2, 3, 4, 5, 6) comprises a product camera (6) for capturing image or video data of a physical item presented by a user,
- the data processing means (10) comprises a vision-analysis module (24) for generating identification information about the physical item based on said image or video data,
- the data processing means (10) is configured to generate said output information (12) based on the identification information.

8. The computer terminal (1) of the preceding claim, wherein said topic-related information (15) includes information related to a number of specific physical items, wherein the data processing means (10) comprises a decision module for deciding whether the physical item is part of said number of specific physical items, wherein,
- if yes, the data processing means (10) is configured to generate said output information (12) based on the topic-related information (15) related to the physical item,
- if no, the data processing means (10) is configured to retrieve information based on image or video data of the physical item and to generate said output information (12) based on obtained information.

9. The computer terminal (1) of one of the preceding claims, wherein the at least one input device (2, 3, 4, 5, 6) comprises a scene camera (5) for capturing image or video information including a plurality of persons, wherein the data processing means (10) comprises a person-detection module to detect one or more persons in the captured image or video information, wherein the data processing means (10) is configured such that one or more persons of the detected one or more persons are addressed using speech information outputted by a speaker (11) of the computer terminal (1).

10. The computer terminal (1) of one of the preceding claims, wherein the at least one input device (2, 3, 4, 5, 6) comprises a scene camera (5) for capturing image or video information including one or more persons, wherein the data processing means (10) comprises a gesture-detection module to detect one or more gestures performed by a person, wherein the data processing means (10) is configured such that said output information (12) is based on a detected gesture.

11. The computer terminal (1) according to one of the preceding claims, wherein:
- the computer terminal (1) comprises an acoustic input device (3) for receiving voice information,
- the data processing means (10) comprises a speech-recognition module (28) for recognizing text out of the received voice information,
- the data processing means (10) is configured to generate said output information (12) based on the recognized text.

12. The computer terminal (1) according to one of the preceding claims, wherein the computer terminal (1) comprises a user-detection sensor to detect a presence of a user, wherein the data processing means (10) is configured to start a dialogue with a user when a user has been detected.

13. The computer terminal (1) according to one of the preceding claims, wherein the data processing means (10) is configured to apply a deep-learning algorithm (29) to generate the output information (12).

14. A computer-implemented method for interaction with at least one person using a computer terminal (1), comprising
- Receiving interaction information,
- Generating output information (12) based on the received interaction information,
- Visually outputting said output information (12),
- Generating virtual-reality information based on topic-related information (15), said virtual-reality information including an animated character, wherein said output information (12) includes said virtual-reality information.

15. A computer program product comprising instructions which, when the program is executed by a computer terminal (1), cause the computer terminal (1) to carry out the steps of claim 14.
